# FASCICULE DE BREVET EUROPEEN

(11) **EP 2 741 996 B1**
(45) Date de publication et mention de la délivrance du brevet: **21.03.2018**
(21) Numéro de dépôt: 12758559.4
(22) Date de dépôt: 09.08.2012
(51) Int. Cl.: C01B 3/34, C01B 3/48, C10L 3/08, C10L 3/10

(54) **PROCEDE POUR UNE PRODUCTION D'HYDROGENE A PARTIR DE BIOGAZ**
VERFAHREN ZUR HERSTELLUNG VON WASSERSTOFF AUS BIOGAS
METHOD FOR PRODUCING HYDROGEN FROM BIOGAS

(30) Priorité: 11.08.2011 FR 1157294
(43) Date de publication de la demande: 18.06.2014
(73) Titulaire: L'Air Liquide Société Anonyme pour l'Etude et l'Exploitation des Procédés Georges Claude, 75007 Paris (FR)
(72) Inventeur: ALLIDIERES, Laurent, F-38410 Saint Martin D'uriage (FR)
(74) Mandataire: Conan, Philippe Claude
(86) Numéro de dépôt international: PCT/FR2012/051877
(87) Numéro de publication internationale: WO 2013/021140

(56) Documents cités:
- EP-A1- 1 811 011
- WO-A2-2009/057939
- US-A- 4 770 676
- US-A- 5 932 181
- MURADOV N ET AL: "Hydrogen production by catalytic processing of renewable methane-rich gases", INTERNATIONAL JOURNAL OF HYDROGEN ENERGY, ELSEVIER SCIENCE PUBLISHERS B.V., BARKING, GB, vol. 33, no. 8, 1 avril 2008 (2008-04-01), pages 2023-2035, XP022650886, ISSN: 0360-3199, DOI: 10.1016/J.IJHYDENE.2008.02.026 [extrait le 2008-04-18]
- SCHOLZ W H: "VERFAHREN ZUR GROSSTECHNISCHEN ERZEUGUNG VON WASSERSTOFF UND IHRE UMWELTPROBLEMATIK", BERICHTE AUS TECHNIK UND WISSENSCHAFT, LINDE AG. WIESBADEN, DE, no. 67, 1 janvier 1992 (1992-01-01), pages 13-21, XP000257024, ISSN: 0942-332X
- E PILARCZYK ET AL: "Natural gas from landfill gases", RESOURCES AND CONSERVATION, vol. 14, 1 mars 1987 (1987-03-01), pages 283-294, XP055020736,

## Description

La présente invention concerne un procédé de production d'hydrogène par reformage à la vapeur à partir de biogaz.

Elle se rapporte plus particulièrement à un procédé de production d'hydrogène comprenant au moins une étape de mise à disposition de biogaz brut, une étape de purification d'une partie du biogaz brut pour produire du bio méthane , une étape de reformage à la vapeur du bio méthane issu de la purification pour produire un gaz de synthèse, ainsi que des étapes ultérieures de traitements du gaz de synthèse obtenu pour produire de l'hydrogène, parmi lesquelles au moins des étapes de shift et PSA.

Les unités de production d'hydrogène mettant en oeuvre une production de gaz de synthèse par reformage de gaz naturel à la vapeur ont besoin pour la mise en oeuvre de l'étape de génération de gaz de synthèse (aussi appelé syngas) de faire fonctionner les réacteurs de reformage à des températures de l'ordre de 800 à 900 °C. Lors de la phase de démarrage du reformage à la vapeur, il est nécessaire de procéder à un chauffage initial qui va assurer la mise en température du four de reformage, puis permettre le démarrage du reformage. Ce chauffage initial s'obtient normalement en brulant du gaz naturel dans un bruleur associé au four. Pour éviter d'endommager le four, sa mise en température doit être progressive, elle se fait donc sur une longue durée de temps ; ce combustible initial est aussi appelé combustible primaire. Une fois le fonctionnement de l'installation stabilisé, une grande partie de la chaleur nécessaire pour assurer le maintien en température du four et pour fournir l'apport de chaleur nécessaire à la réaction de reformage du méthane - réaction endothermique prépondérante lors du reformage - est obtenue en brulant le gaz résiduaire de l'unité de purification d'hydrogène par PSA - unité qui située en aval du reformage sépare l'hydrogène contenu dans le gaz de synthèse ; ce combustible additionnel est appelé combustible secondaire - le résiduaire de PSA (seul ou avec d'autres gaz résiduaires de procédé), quoiqu'appelé combustible secondaire, peut fournir jusqu'à 90% des besoins du reformage en combustible en fonctionnement normal. Le complément ou « talon de chaleur » est apporté par le combustible primaire, c'est-à dire le gaz naturel dans le cas d'une installation alimentée en gaz naturel.

Sur des sites où on ne dispose pas de gaz naturel - faute de réseau de distribution notamment - mais où on peut disposer de biogaz, on lui substitue quand cela est possible du bio méthane, qui est un biogaz épuré de sorte à pouvoir être substitué au gaz naturel ; il est débarrassé essentiellement de CO₂, qui présent à une teneur de plusieurs dizaines de % est le deuxième constituant le plus important dans le biogaz. N. Muradov & all. - " Hydrogen production by catalytic processing of renewable methane-rich gases", INTERNATIONAL JOURNAL OF HYDROGEN ENERGY; vol. 33, no. 8, 2008 pages 2023-2035 décrit des procédés pour la production d'hydrogène à partir du biogaz. Les termes employés dans le texte pour définir le biogaz à ses différents degrés de pureté - qu'il s'agisse des termes « biogaz » ou « bio méthane » - sont utilisés dans le contexte de l'invention en leur attribuant la signification qu'ils ont normalement dans la technique, et tels qu'ils sont compris par l'homme du métier, l'homme du métier étant une personne oeuvrant dans la filière des bioénergies, et particulièrement dans la purification et l'utilisation du biogaz. Ainsi, les termes les termes biogaz et bio méthane sont à comprendre comme indiqués ci-après.

Le biogaz est un gaz produit par la fermentation de matières organiques animales ou végétales en l'absence d'oxygène (fermentation anaérobique). Un biogaz comprend typiquement de 45% à 70% en volume de méthane (CH₄), de 30% à 50% en volume de dioxyde de carbone (CO₂), il peut aussi contenir de l'azote (N₂) ainsi que des traces d'autres composants de type sulfure, siloxane, COV (composé organique volatil) notamment. Il peut être collecté dans les centres d'enfouissement de déchets ou être obtenu via une unité de méthanisation.

Le bio méthane est un biogaz ayant subi une purification poussée lui assurant une composition comparable à celle du gaz naturel, permettant ainsi de l'utiliser à la place du gaz naturel, il est aussi identifié en tant que gaz naturel de substitution. En d'autres termes, le bio méthane (bio méthane) est un biogaz purifié de sorte à respecter les spécifications du gaz naturel auquel il va être substitué. Pour être distribué par réseau en substitution du gaz naturel, le bio méthane doit en respecter les spécifications. Il s'agit alors essentiellement d'avoir un pouvoir calorifique suffisant pour être au moins équivalent au gaz naturel commercialisable auquel il est substituable. Les normes varient selon les réseaux de distribution, aussi les spécifications imposées au bio méthane peuvent elles aussi varier en fonction du gaz naturel distribué auquel il peut être substitué. A titre d'exemple, les réseaux de distribution en France distribuent deux qualités de gaz, un gaz dit « à bas pouvoir calorifique », dont le pouvoir calorifique supérieur (PCS) doit être au moins égal à 9,5 kWh/Nm³, et un gaz à haut pouvoir calorifique, dont le PCS est au moins égal à 10,7 kWh/Nm³.

L'épuration du biogaz en bio méthane consiste ainsi essentiellement à éliminer le CO₂, afin d'augmenter la teneur en méthane, mais elle doit s'accompagner de l'élimination des éléments nuisibles présents dans le biogaz, parmi lesquels au moins les composés soufrés, mais aussi les siloxanes ainsi que les COVs.

Utilisé en tant que gaz naturel de substitution dans les réseaux de distribution, le bio méthane peut aussi être utilisé en substitution du gaz naturel, pour produire de l'hydrogène.

Lorsque le bio méthane est utilisé en substitution du gaz naturel pour produire de l'hydrogène, il est logiquement utilisé aussi pour couvrir les besoins de chaleur habituellement couverts par le gaz naturel dans les installations traitant du gaz naturel (mise en température du reformeur et talon de chaleur notamment).

Ainsi que déjà rappelé, l'épuration du biogaz en bio méthane consiste à éliminer les éléments gênants comme les composés soufrés et les siloxanes et/ou les COVs, mais surtout le CO₂ présent en quantité importante dans le biogaz, afin d'augmenter la concentration en méthane, le coût de cette épuration est donc élevé (40-70 €/MWh). Aussi, dans le cas d'une installation de reformage de méthane à la vapeur fonctionnant au bio méthane, l'utilisation du gaz d'alimentation du reformeur en tant que combustible primaire (c'est-à-dire combustible lors de la phase de démarrage, combustible pour pallier au défaut de gaz résiduaire et en tant que talon durant le reformage) est économiquement pénalisant.

Il est donc souhaitable, afin de limiter le coût de production d'hydrogène par reformage de bio méthane, de substituer au bio méthane un combustible d'un coût moins élevé, en terme d'OPEX et/ ou de CAPEX que le gaz de procédé, mais qui soit disponible sur le site de l'installation de reformage au même titre que le gaz de procédé.

La présente invention a notamment pour but de répondre à ce besoin de fourniture d'un combustible présentant un coût plus bas que le gaz de reformage, tout en présentant les mêmes facilités de mise à disposition.

L'invention propose pour cela d'utiliser pour les besoins en combustible primaire non pas du bio méthane mais du biogaz. Présentant une pureté pouvant être très inférieure à celle du bio méthane utilisé pour le reformage, son coût sera donc très inférieur. Il pourra s'agir de biogaz brut - c'est-à-dire non purifié dont le coût (<10 € /MWh) est très inférieur (6 à 10 fois moins cher). Il pourra s'agir aussi - selon le cas - de biogaz partiellement purifié (on parle aussi dans ce cas de pré-purification, ou prétraitement ou traitement primaire...).

Il pourra être nécessaire dans le contexte de l'invention de différencier des degrés de purification du biogaz avant d'atteindre la pureté du bio méthane, c'est pourquoi, le biogaz tel qu'il provient de la fermentation anaérobique (= en l'absence d'oxygène) sera - quand le contexte le justifie - identifié comme biogaz brut.

Selon un objet de l'invention, il est proposé un procédé de production d'hydrogène à partir de biogaz comprenant au moins les étapes suivantes :
- une étape (a) de mise à disposition de biogaz brut contenant au moins de 45% à 70% de CH₄, et respectivement au moins de 30% à 50% de CO₂, ainsi que des composés de type sulfure, siloxane et/ ou COV
- une étape (b) de purification d'une première partie du biogaz pour produire du bio méthane comprenant :
   - une étape (b₀) de pré-purification destinée à éliminer au moins des composés de type sulfure et de préférence les siloxanes et les COVs,
   - une étape (b1) d'élimination de CO₂ de sorte à produire du bio méthane contenant moins de 8% de CO₂, préférentiellement moins de 5%. de CO₂, plus préférentiellement moins de 2,5% de CO₂
- une étape (c) de reformage à la vapeur du bio méthane issu de l'étape (b) pour l'obtention d'un gaz de synthèse contenant au moins de l'hydrogène, du monoxyde de carbone, ainsi que du dioxyde de carbone, du méthane, de la vapeur d'eau ainsi que des impuretés,
- une étape (d) de réaction de shift pour oxyder la majeure partie du monoxyde de carbone en dioxyde de carbone en présence d'eau avec production correspondante d'hydrogène,
- une étape (e) de séparation de constituants du gaz de synthèse sec dans une unité d'adsorption par modulation de pression (ou PSA H₂) permettant l'obtention d'un flux riche en hydrogène et d'un flux de gaz résiduaire de PSA,
- une étape (f) de recyclage de tout ou partie du résiduaire de PSA pour alimenter les brûleurs du four de reformage à la vapeur de l'étape (c) en combustible secondaire,
- une étape (g) d'alimentation des brûleurs du four de reformage en combustible primaire fourni à partir de la deuxième partie du biogaz brut de l'étape a; avec la deuxième partie du biogaz brut destinée à fournir le combustible primaire alimentant l'étape (g) subit, préalablement à ladite étape (g), une étape (g0) de purification partielle de sorte à produire un biogaz débarrassé des sulfures, et de préférence des siloxanes et des COVs.
Le biogaz alimentant les brûleurs contient une proportion importante de CO₂, cependant, s'agissant de dioxyde de carbone d'origine renouvelable et non fossile, il est donc considéré comme ayant un impact environnemental neutre.

Le procédé comprend, en aval de la génération de gaz de synthèse (ou syngas), des étapes qui ne sont spécifiées ici dont des étapes de refroidissement du gaz de synthèse issu du reformage avec récupération de la chaleur disponible, refroidissement de gaz de synthèse shifté, avec séparation de l'eau condensée contenue dans le syngas, séchage additionnel éventuel, ainsi que d'autres étapes connues en soit.

La solution proposée par l'invention d'utilisation de biogaz (brut ou partiellement purifié) pour les besoins thermiques du reformeur, économise une part des coûts de production de l'hydrogène ainsi produit dit renouvelable (car provenant du reformage de gaz issus du biogaz). L'utilisation de biogaz en tant que combustible peut permettre d'économiser jusqu'à 10% sur l'OPEX.

Un deuxième avantage de cette utilisation est qu'elle permet de diminuer la taille de l'unité de purification de biogaz pour produire le bio méthane. En effet, limiter l'utilisation du bio méthane aux réactions produisant l'hydrogène, c'est essentiellement ne pas éliminer le dioxyde de carbone dans le biogaz destiné à la combustion. Compte tenu des teneurs élevées en CO₂ dans le biogaz, cela permet de diminuer considérablement la taille de l'unité de purification produisant le bio méthane. Rappelons en effet que l'installation doit être dimensionnée pour être capable de fournir suffisamment de combustible primaire pour faire face à l'ensemble des besoins de chauffage du reformeur en phase de démarrage, mais aussi en cas de défaillance dans la fourniture de combustible secondaire (résiduaire de PSA en général). Ceci permet un gain pouvant atteindre 30% sur le CAPEX de la purification.

Selon le cas, le procédé selon l'invention peut présenter une ou plusieurs des caractéristiques suivantes :
- le biogaz alimentant les brûleurs selon l'étape (g) peut être du biogaz brut ; en effet, moyennant l'utilisation de brûleurs adaptés, et moyennant un traitement adapté des gaz de combustion préalablement à leur envoi vers l'atmosphère, il est possible d'utiliser un biogaz brut en tant que combustible, sans traitement préalable ;
- de préférence, la deuxième partie du biogaz brut destinée à fournir le combustible primaire alimentant l'étape (g) subit préalablement à ladite étape (g) une étape (g₀) de purification partielle de sorte à produire un biogaz débarrassé des sulfures, et de préférence des siloxanes et des COVs.
- l'étape (g₀) de purification partielle de la deuxième partie du biogaz et l'étape (b₀) de pré-purification de la première partie du biogaz peuvent avantageusement être une étape commune au traitement de la totalité du biogaz brut de l'étape (a), le biogaz résultant étant ensuite séparé en deux parties, la première partie de biogaz alimentant l'étape (b₁) et la seconde partie du biogaz, apte à être envoyée aux brûleurs, alimente l'étape (g).

L'étape de purification partielle (pré-purification) comprenant une étape d'élimination du sulfure d'hydrogène présent dans le biogaz, cette élimination du sulfure d'hydrogène peut être réalisée par adsorption avec une charge perdue d'adsorbants à remplacer périodiquement (charbons actifs), ou par toute autre méthode connue de l'homme du métier.

En fonction de la méthode utilisée pour la réalisation de l'étape (b₁) d'élimination du dioxyde de carbone, cette étape de pré-purification (ou purification partielle) inclura - suivant les cas- une élimination des siloxanes, et/ ou des composés organiques volatils (COV) qui peut être réalisée par exemple par adsorption à température modulée (TSA)

L'élimination de CO₂ lors de la purification de la charge à reformer pour produire le bio méthane peut être réalisée par différentes méthodes, ; elle est préférentiellement réalisée par perméation sélective.

Selon un autre aspect de l'invention, celle-ci concerne une installation pour la production d'hydrogène à partir de biogaz, la production étant telle que définie dans la revendication 1, comprenant au moins:
- une source de biogaz brut
- des moyens de pré purification et d'élimination de CO₂ d'une première partie du biogaz pour produire du bio méthane,
- un module de reformage,
- un module de shift,
- un module PSA pour une production d'hydrogène,
- des moyens de recyclage du résiduaire de PSA ainsi que d'alimentation des brûleurs du module de reformage en combustible secondaire,
- des moyens d'alimentation des brûleurs du module de reformage en combustible primaire fourni à partir de la deuxième partie du biogaz brut de l'étape (a), et
- des moyens de purification partielle aptes à produire un biogaz partiellement purifié ainsi que des moyens d'alimentation des brûleurs du module de reformage en biogaz partiellement purifié provenant de la deuxième partie du biogaz brut de l'étape (a).
Les installations ci-après sont des variantes de l'installation ci-dessus, pour la mise en oeuvre des procédés préférés. L'installation peut comprendre des moyens d'alimentation des brûleurs du module de reformage en biogaz brut provenant de la deuxième partie du biogaz brut de l'étape (a). L'installation comprend des moyens d'élimination au moins des composés sulfures et/ou siloxanes et/ou COV pour produire un combustible apte à alimenter les brûleurs du four de reformage. L'installation peut comprendre des moyens de purification partielle aptes à la mise en oeuvre d'une étape commune de traitement de la totalité du biogaz brut de l'étape (a), des moyens de séparation du biogaz résultant en deux parties, des moyens d'alimentation de l'étape(b₁) en la première partie du biogaz et des moyens d'alimentation de l'étape (g) en la seconde partie du biogaz.

D'autres caractéristiques et avantages de la présente invention apparaitront à la lecture de la description ci-après d'exemples de mise en oeuvre non limitatifs, descriptions faites en référence aux figures annexées dans lesquelles :
- la Figure 1 présente une vue schématique d'un procédé de production d'hydrogène à partir de biogaz, intégrant un reformeur à la vapeur avec une unité de purification de biogaz selon l'art antérieur.
- La Figure 2 est une vue schématique d'un procédé de production d'hydrogène à partir de biogaz, intégrant un reformeur à la vapeur avec une unité de purification de biogaz, utilisant- du biogaz brut en tant que combustible, en remplacement de gaz de charge du reformeur.
- La Figure 3 est une vue schématique d'une variante du procédé de production d'hydrogène à partir de biogaz, intégrant un reformeur à la vapeur avec une unité de purification de biogaz selon l'invention, utilisant du biogaz pré purifié en tant que combustible, en remplacement de gaz de charge du gaz de charge du reformeur.

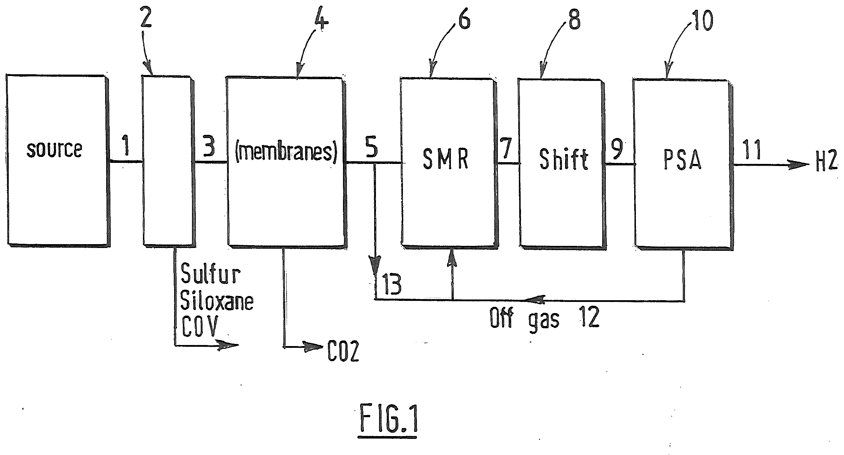

Selon la Figure 1 - schéma illustrant l'art antérieur - le biogaz brut 1 contenant 45% à 70% de CH₄, de 30% à 50% de CO₂, de l'azote (N₂), ainsi que des sulfures, des traces de siloxanes, COV et autres composants, est purifié en deux étapes : lors d'une première étape de pré-purification 2, les composés dérivés du soufre, les siloxanes et les COV sont éliminés pour fournir le biogaz pré-purifié 3, le biogaz pré-purifié subit ensuite une étape 4 d'élimination de CO₂ utilisant une technique membranaire destinée à le débarrasser de son CO₂ de sorte à produire du bio méthane 5.

Le bio méthane 5 est alors utilisé pour la production d'hydrogène selon un procédé classique dont les étapes principales sont rappelées ci-après : reformage à la vapeur dans un reformeur 6 pour produire un syngas 7, lequel réagit ensuite avec de la vapeur d'eau, en présence de catalyseur approprié, en 8, pour produire un syngas shifté 9 dont les composants essentiels sont H₂ et CO₂, puis le syngas shifté 9 est purifié via un PSA 10 pour fournir de l'hydrogène 11 et un résiduaire gazeux 12. Ce résiduaire de PSA 12 est utilisé en tant que combustible secondaire dans le reformeur.

Une fraction 13 du bio méthane 5 est prélevée pour être utilisée en tant que combustible primaire pour le chauffage du reformeur.

Bien entendu, la production d'hydrogène relève d'un procédé beaucoup plus complexe que celui de la Figure 1, mais, comme déjà indiqué dans la description, il faut considérer que le déroulement du procédé, à partir du point d'entrée de la charge dans le reformeur est assimilable à celui d'une production d'hydrogène à partir d'une alimentation en gaz naturel classique.

Il convient de noter que les étapes de pre-purification et d'élimination de CO₂ ne sont pas détaillées ; plus ou moins complexes selon les cas, elles produisent des flux non représentés, qui peuvent être utilisés de façon connue, être par exemple recyclés ou utilisés pour des étapes de régénération diverses dans le procédé.

Pour une installation fonctionnant au gaz naturel, et produisant 268 Nm³/h d'hydrogène, en marche normale, environ 500kW thermique (PCI) sont utilisés pour maintenir le four en température et fournir la chaleur de réaction de reformage. Sur ces 500 kW, 150kW proviennent du gaz naturel et 350kW provenant de la recirculation du gaz résiduaire du PSA.

En cas d'arrêt de la boucle de recirculation du gaz résiduaire du PSA (dysfonctionnement du PSA, défaut sur la boucle, etc..), l'installation doit avoir la capacité de fonctionner au débit nominal uniquement en utilisant du gaz naturel pour fournir la chaleur de réaction, soit 500kW. En effet, lorsque le four démarre ou que le PSA s'arrête de fonctionner, toute la charge thermique de 500kW nécessaire pour produire 268Nm3/h d'hydrogène doit pouvoir provenir du combustible primaire.

Dans le cas d'un système classique utilisant du biogaz qui fonctionne selon le mode de fonctionnement classique de la Figure 1, le système intègre donc la purification du biogaz en bio méthane (gaz naturel de substitution) et le reformage du bio méthane, cela implique de dimensionner l'installation de purification en amont du reformeur pour pouvoir traiter le débit de méthane combustible correspondant à la pleine charge thermique du reformeur (500 kW, soit 50 Nm³/h de CH4) en plus du méthane strictement nécessaire à la réaction de reformage pour produire l'hydrogène (100Nm³/h). Par conséquent, dans la configuration classique illustrée par la Figure 1, cela implique de sur-dimensionner l'installation de purification du biogaz (en bio méthane) d'un facteur 1.5 pour pouvoir produire suffisamment de bio méthane pour suppléer au manque de combustible secondaire dans le cas d'arrêt subi du PSA à pleine charge ou lors d'un démarrage. De plus, l'installation doit pouvoir réagir de manière instantanée à la demande d'un débit de combustible primaire correspondant, ce qui potentiellement complique le système de contrôle/ commande par rapport à une installation fonctionnant au gaz naturel.

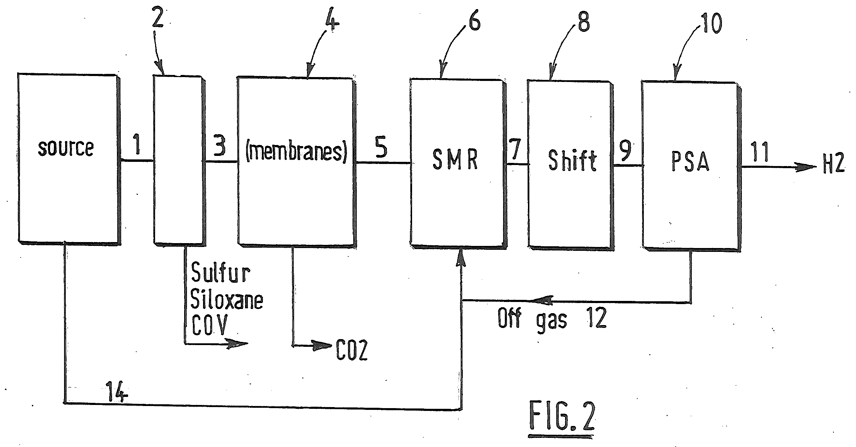

La Figure 2 représente un procédé de production d'hydrogène à partir de biogaz intégrant un reformeur à la vapeur avec une unité de purification de biogaz, utilisant du biogaz brut en tant que combustible. L'ensemble des flux ainsi que les éléments de l'installation communs aux différentes figures portent les mêmes références. Le procédé de la Figure 2 se différencie de celui de la Figure 1, c'est-à-dire de l'art antérieur en ce que la totalité du flux 5 de biogaz purifié est utilisé pour produire l'hydrogène, et en ce qu'un flux 14 de biogaz brut est prélevé au niveau de la source pour être utilisé en tant que combustible primaire pour le chauffage du reformeur. Ce procédé s'applique dans le cas où le reformeur est apte à recevoir un combustible contenant des composés de type sulfures, siloxane et COV ; c'est-à-dire qu'il dispose au moins de brûleurs adaptés et est équipé pour traiter les fumées.

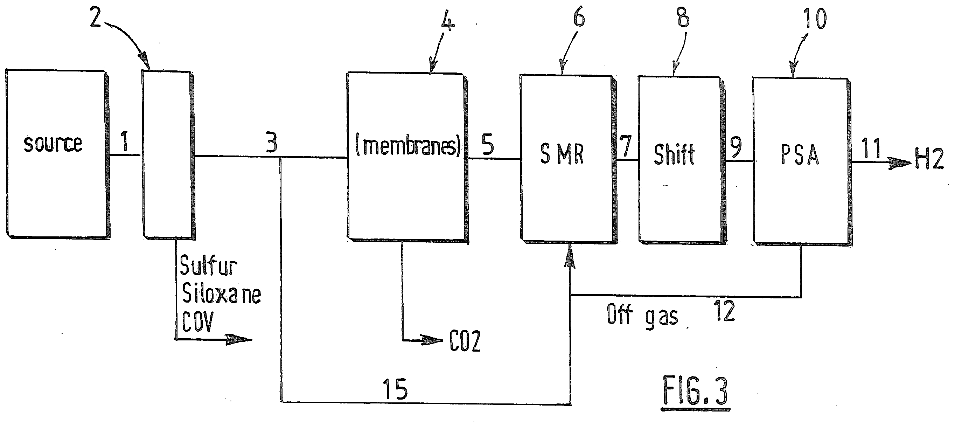

Une variante de l'invention est représentée sur la Figure 3, selon laquelle la totalité du flux 1 de biogaz brut est pré-purifié en 2, de sorte à éliminer les composants nuisibles (sulfures et/ou, siloxanes et/ou, COV) et un flux 15 du biogaz partiellement purifié, est prélevé sur le flux 3, formant ainsi la deuxième partie du biogaz, qui est destinée à être utilisée en tant que combustible primaire pour le chauffage du reformeur.

La première partie du biogaz pré-purifiée est ensuite traitée par membranes (procédé MEDAL en particulier) pour être débarrassée du CO₂ contenu, de sorte à fournir du bio méthane.

Dans le cas du procédé selon l'invention, le talon de chaleur nécessaire à la réaction - fourni de façon connue par du gaz naturel - pour produire 268Nm3/h (correspondant à une puissance 150kW en PCI) - est alors fourni par du biogaz pré-purifié et donc débarrassé des composants soufrés ou siloxanes ou COV selon la Figure 3. Avec un coût du bio-méthane de 50 €/MWh tandis que celui du biogaz est inférieur à 10 €/MWh, et en fonctionnement normal, le coût opératoire du système de purification global est diminué de 10%.

De plus, comme expliqué précédemment, utiliser du biogaz qui n'a pas été débarrassé de son CO₂ brut pour fournir la chaleur au four dans le cas d'une marche dégradée (arrêt du PSA ou démarrage de l'installation) permet de réduire d'un facteur 30% le cout de l'installation de prétraitement du biogaz, le bio méthane produit servant exclusivement à la réaction de production de l'hydrogène.

Bien entendu, l'invention ne se limite pas aux modes de purification cités ci-dessus, on pourra envisager d'autres techniques de pré-purification et de purification, ainsi que de régénération, de traitement et recyclages liés à celles-ci, connus en soit mais non décrits ici.

Parmi les avantages du procédé de l'invention, on peut citer :
- la rationalisation, dans le cadre du procédé, des traitements permettant la purification du biogaz en fonction de la spécificité de ses utilisations, dans le sens d'une meilleure efficacité technico-économique ;
- l'optimisation de la valorisation d'une énergie durable grace à une utilisation géographiquement distribuée.

## Revendications

1. Procédé de production d'hydrogène à partir de biogaz comprenant au moins les étapes suivantes :
- une étape (a) de mise à disposition de biogaz brut contenant au moins de 45% à 70% de CH₄, et respectivement de 30% à 50% de CO₂, ainsi que au moins des composés de type sulfures, siloxane et/ ou COV
- une étape (b) de purification d'une première partie du biogaz pour produire du bio méthane comprenant :
• une étape (b₀) de pré-purification (2) destinée à éliminer au moins des composés de type sulfure et de préférence les siloxanes et les COVs,
• une étape (b₁) d'élimination de CO₂ (4) de sorte à produire du bio méthane (5) contenant moins de 8% de CO₂, préférentiellement moins de 5% de CO₂, plus préférentiellement moins de 2,5% de CO₂,
- une étape (c) de reformage (6) à la vapeur du bio méthane issu de l'étape (b) pour l'obtention d'un gaz de synthèse (7) contenant au moins de l'hydrogène, du monoxyde de carbone, ainsi que du dioxyde de carbone, du méthane, de la vapeur d'eau ainsi que des impuretés,
- une étape (d) de réaction de shift (8) pour oxyder la majeure partie du monoxyde de carbone en dioxyde de carbone en présence d'eau avec production correspondante d'hydrogène,
- une étape (e) de séparation (10) de constituants du gaz de synthèse sec dans une unité d'adsorption par modulation de pression (ou PSA H₂) permettant l'obtention d'un flux riche en hydrogène (11) et d'un flux de gaz résiduaire (12) de PSA,
- une étape (f) de recyclage de tout ou partie du résiduaire de PSA pour alimenter les brûleurs du four de reformage à la vapeur de l'étape (c) en combustible secondaire,
- une étape (g) d'alimentation des brûleurs du four de reformage en combustible primaire fourni à partir de la deuxième partie (15) du biogaz brut de l'étape (a) ; **avec la deuxième partie du biogaz brut destinée à fournir le combustible primaire alimentant l'étape (g) subit, préalablement à ladite étape (g), une étape (g₀) de purification partielle de sorte à produire un biogaz débarrassé des sulfures, et de préférence des siloxanes et des COVs.**

2. Procédé selon la revendication 1 **caractérisé en ce que** le biogaz alimentant les brûleurs selon l'étape (g) est du biogaz brut.

3. Procédé selon la revendication 1, **caractérisé en ce que** l'étape (g₀₎ de purification partielle de la deuxième partie du biogaz et l'étape (b₀) de pré-purification de la première partie du biogaz constituent une étape commune au traitement de la totalité du biogaz brut de l'étape (a), le biogaz résultant étant ensuite séparé en deux parties, la première partie de biogaz alimentant l'étape (b₁) et la seconde partie du biogaz alimente l'étape (g).

4. Installation pour la production d'hydrogène à partir de biogaz, la production étant telle que définie dans la revendication 1, comprenant au moins :
- une source de biogaz brut
- des moyens de pré-purification (2),
- des moyens (4) d'élimination de CO₂ d'une première partie du biogaz pour produire du bio méthane,
- un module de reformage (6),
- un module de shift (8),
- un module PSA (10) pour une production d'hydrogène,
- des moyens de recyclage du résiduaire (12) de PSA ainsi que d'alimentation des brûleurs du module de reformage en combustible secondaire,
- des moyens d'alimentation des brûleurs du module de reformage en combustible primaire fourni à partir de la deuxième partie (15) du biogaz brut de l'étape (a), et
- **des moyens de purification partielle aptes à produire un biogaz partiellement purifié ainsi que des moyens d'alimentation des brûleurs du module de reformage en biogaz partiellement purifié provenant de la deuxième partie du biogaz brut de l'étape (a).**

5. Installation selon la revendication 4 pour la mise en oeuvre du procédé de la revendication 2 comprenant des moyens d'alimentation des brûleurs du module de reformage en biogaz brut provenant de la deuxième partie du biogaz brut de l'étape (a).

6. Installation selon la revendication 4 pour la mise en oeuvre du procédé de la revendication 3 comprenant des moyens de purification partielle aptes à la mise en oeuvre d'une étape commune de traitement de la totalité du biogaz brut de l'étape (a), des moyens de séparation du biogaz résultant en deux parties, des moyens d'alimentation de l'étape (b₁) en la première partie du biogaz et des moyens d'alimentation de l'étape (g) en la seconde partie du biogaz.

## Patentansprüche

1. Verfahren zur Herstellung von Wasserstoff aus Biogas, umfassend mindestens die folgenden Schritte:
- einen Bereitstellungsschritt (a) von unbehandeltem Biogas, das mindestens 45 % bis 70 % CH₄ und beziehungsweise 30 % bis 50 % CO₂ sowie mindestens Verbindungen von Typ Sulfide, Siloxan und/oder VOC enthält,
- einen Reinigungsschritt (b) eines ersten Teils des Biogases, um Biomethan zu produzieren, umfassend:
• einen Schritt (b₀) der Vorreinigung (2), der zur Entfernung mindestens der Verbindungen von Typ Sulfid und vorzugsweise der Siloxane und der VOCs bestimmt ist,
• einen Schritt (b₁) der Entfernung von CO₂ (4), so dass Biomethan (5) produziert wird, das unter 8 % CO₂, vorzugsweise unter 5 % CO₂, in noch bevorzugter Weise unter 2,5 % CO₂, enthält,
- einen Schritt (c) der Dampfreformierung (6) des Biomethans aus Schritt (b), um ein Synthesegas (7) zu erhalten, das mindestens Wasserstoff, Kohlenmonoxid sowie Kohlendioxid, Methan, Wasserdampf sowie Unreinheiten enthält,
- einen Schritt (d) der Shiftreaktion (8), um den größten Teil des Kohlenmonoxids in Kohlendioxid bei Anwesenheit von Wasser mit entsprechender Produktion von Wasserstoff zu oxidieren,
- einen Schritt (e) der Trennung (10) von Bestandteilen des trockenen Synthesegases in einer Adsorptionseinheit durch Druckmodulation (oder PSA H₂), was den Erhalt eines wasserstoffreichen Stroms (11) und eines PSA-Restgasstroms (12) erlaubt,
- einen Recyclingschritt (f) des gesamten oder eines Teils des PSA-Rests, um die Brenner des Reformierungsofens mit dem Dampf von Schritt (c) als sekundärer Brennstoff zu versorgen,
- einen Versorgungsschritt (g) der Brenner des Reformierungsofens mit primärem Brennstoff, bereitgestellt vom zweiten Teil (15) des unbehandelten Biogases von Schritt (a); **wobei der zweite Teil des unbehandelten Biogases, der zur Bereitstellung des primären Brennstoffs, der Schritt (g) versorgt, bestimmt ist, vor dem Schritt (g) einem Schritt (g₀) der teilweisen Reinigung unterzogen wird, um ein Biogas frei von Sulfiden und vorzugsweise von Siloxanen und von VOCs zu produzieren.**

2. Verfahren nach Anspruch 1, **dadurch gekennzeichnet, dass** das Biogas, das die Brenner gemäß Schritt (g) versorgt, unbehandeltes Biogas ist.

3. Verfahren nach Anspruch 1, **dadurch gekennzeichnet, dass** der Schritt (g₀) der teilweisen Reinigung des zweiten Teils des Biogases und der Schritt (b₀) der Vorreinigung des ersten Teils des Biogases einen gemeinsamen Schritt bei der Behandlung des gesamten unbehandelten Biogases von Schritt (a) darstellen, wobei das resultierende Biogas dann in zwei Teile zerlegt wird, wobei der erste Teil des Biogases Schritt (b₁) versorgt und der zweite Teil des Biogases Schritt (g) versorgt.

4. Anlage für die Produktion von Wasserstoff aus Biogas, wobei die Produktion Anspruch 1 entspricht, umfassend mindestens:
- eine Quelle unbehandelten Biogases,
- Vorreinigungsmittel (2),
- Mittel (4) zum Entfernen von CO₂ aus einem ersten Teils des Biogases, um Biomethan zu produzieren,
- ein Reformierungsmodul (6),
- ein Shiftmodul (8),
- ein PSA-Modul (10) für die Produktion von Wasserstoff,
- Mittel für das Recycling des PSA-Rests (12) sowie zur Versorgung der Brenner des Reformierungsmoduls mit sekundärem Brennstoff,
- Mittel zur Versorgung der Brenner des Reformierungsmoduls mit primärem Brennstoff, bereitgestellt vom zweiten Teil (15) des unbehandelten Biogases von Schritt (a), und
- **Mittel zur teilweisen Reinigung, die imstande sind, ein teilweise gereinigtes Biogas zu produzieren, sowie Mittel zur Versorgung der Brenner des Reformierungsmoduls mit teilweise gereinigtem Biogas aus dem zweiten Teil des unbehandelten Biogases von Schritt (a).**

5. Anlage nach Anspruch 4 für die Durchführung des Verfahrens von Anspruch 2, umfassend Mittel zur Versorgung der Brenner des Reformierungsmoduls mit unbehandeltem Biogas aus dem zweiten Teil des unbehandelten Biogases von Schritt (a).

6. Anlage nach Anspruch 4 für die Durchführung des Verfahrens von Anspruch 3, umfassend Mittel zur teilweisen Reinigung, die zur Durchführung eines gemeinsamen Behandlungsschritts des gesamten unbehandelten Biogases von Schritt (a) imstande sind, Trennmittel des resultierenden Biogases in zwei Teile, Versorgungsmittel von Schritt (b₁) mit dem ersten Teil des Biogases und Versorgungsmittel von Schritt (g) mit dem zweiten Teil des Biogases.

## Claims

1. Method for the production of hydrogen from biogas comprising at least the following steps:
- a step (a) of making available raw biogas containing at least from 45% to 70% of CH₄, and respectively from 30% to 50% of CO₂, as well as at least compounds of the sulphide, siloxane and/or VOC type
- a step (b) of purification of a first portion of the biogas in order to produce bio methane comprising:
• a step (b₀) of pre-purification (2) intended to remove at least compounds of the sulphide type and preferably siloxanes and VOCs,
• a step (b₁) of removing CO₂ (4) in such a way as to produce bio methane (5) containing less than 8% of CO₂, preferably less than 5% of CO₂, more preferably less than 2.5% of CO₂,
- a step (c) steam reformation (6) of the bio methane coming from the step (b) in order to obtain a synthetic gas (7) containing at least hydrogen, carbon monoxide, as well as carbon dioxide, methane, water vapour as well as impurities,
- a step (d) of shift reaction (8) in order to oxidise most of the carbon monoxide into carbon dioxide in the presence of water with corresponding production of hydrogen,
- a step (e) of separating (10) constituents of the dry synthetic gas in an adsorption unit by pressure modulation (or PSA H₂) allowing for the obtaining of a flow rich in hydrogen (11) and a flow of residual gas (12) of PSA,
- a step (f) of recycling all or a portion of the PSA residual in order to supply the burners of the steam reformation oven of the step (c) with secondary fuel,
- a step (g) of supplying the burners of the reformation oven with primary fuel supplied from the second portion (15) of the raw biogas of the step (a); **with the second portion of the raw biogas intended to supply the primary fuel supplying the step (g) undergoes, prior to said step (g), a step (g₀) of partial purification in such a way as to produce a biogas free of sulphides, and preferably siloxanes and VOCs.**

2. Method according to claim 1 **characterised in that** the biogas supplying the burners according to the step (g) is raw biogas.

3. Method according to claim 1, **characterised in that** the step (g₀) of partial purification of the second portion of the biogas and the step (b₀) of pre-purification of the first portion of the biogas constitute a common step in the treatment of all of the raw biogas of the step (a), with the resulting biogas then being separated into two portions, with the first portion of biogas supplying the step (b₁) and the second portion of the biogas supplies the step (g).

4. Installation for the production of hydrogen from biogas, with the production being such as defined in claim 1, comprising at least:
- one source of raw biogas
- means of pre-purification (2),
- means (4) for removing CO₂ from a first portion of the biogas in order to produce bio methane,
- a reformation module (6),
- a shift module (8),
- a PSA module (10) for a production of hydrogen,
- means for recycling the PSA residual (12) as well as supplying the burners of the reformation module with secondary fuel,
- means for supplying the burners of the reformation module with primary fuel supplied from the second portion (15) of the raw biogas of the step (a), and
- **means of partial purification able to produce a partially purified biogas as well as means for supplying burners of the reformation module with partially purified biogas coming from the second portion of the raw biogas of the step (a).**

5. Installation according to claim 4 for the implementation of the method of claim 2 comprising means for supplying burners of the reformation module with biogas coming from the second portion of the raw biogas of step (a).

6. Installation according to claim 4 for the implementation of the method of claim 3 comprising means for partial purification able to implement a common step of treatment of all of the raw biogas of the step (a), means for separating the resulting biogas into two portions, means for supplying of the step (b₁) with the first portion of the biogas and means for supplying of the step (g) with the second portion of the biogas.
